# EUROPEAN PATENT SPECIFICATION

(11) **EP 2 784 943 B1**
(45) Date of publication and mention of the grant of the patent: **03.02.2016**
(21) Application number: 13290074.7
(22) Date of filing: 29.03.2013
(51) Int. Cl.: H04B 3/46, H04M 11/06, H04M 3/30, H04M 3/22

(54) **A device and method for identifying a digital subscriber line holding a disturbing power supply unit**
Vorrichtung und Verfahren zur Identifizierung einer digitalen Teilnehmerleitung mit einer störenden Stromversorgungseinheit
Dispositif et procédé pour identifier une ligne d'abonné numérique supportant une unité d'alimentation en puissance perturbatrice

(43) Date of publication of application: 01.10.2014
(73) Proprietor: ALCATEL LUCENT, 92100 Boulogne-Billancourt (FR)
(72) Inventor: Dupuis, Nicolas, 4051 Chaudfontaine (BE); Drooghaag, Benoit, 1421 Ophain-Bois-Seigneur-Isaac (BE)
(74) Representative: ALU Antw Patent Attorneys

(56) References cited:
- EP-A1- 2 383 896
- WO-A1-2012/091725
- WO-A1-2012/128676
- MAXUEWEN HUAWEI TECHNOLOGIES CO LTD PEOPLEOEB_AMP#8217 ET AL: "An example of degradation of ADSL performance caused by OEB_AMP#8220;REINOEB_AMP#8221; from switch power supply; C 23", ITU-T DRAFT STUDY PERIOD 2005-2008, INTERNATIONAL TELECOMMUNICATION UNION, GENEVA ; CH, vol. STUDY GROUP 5, 1 September 2006 (2006-09-01), pages 1-2, XP017405252,

## Description

### Field of the Invention

The present invention generally relates to identification of Digital Subscriber Lines holding a disturbing power supply unit or PSU. The invention in particular concerns an improved device and method for identifying the disturbing line holding a PSU that induces noise in a plurality of DSL lines, typically forming a binder.

### Background of the Invention

As a result of the development of bandwidth demanding services such as Video-on-Demand (VoD), Internet Protocol Television (IPTV), or Triple-Play, i.e. the congruent delivery of telephony, high-speed internet access and television, over Digital Subscriber Lines (DSLs), the requirements on system performances and customer support become more exigent for DSL operators. As a consequence, DSL operators demand solutions that enable to remotely diagnose physical layer problems, identify the cause of such problems, and suggest actions that the customer or technician can take to improve the performance of a DSL line.

Loop unbundling and the emerging appearance of DSL operators or virtual DSL operators have further complicated investigating and identifying the responsibilities in case one or more DSL lines are plagued by physical layer impairments. In particular within a single binder that may contain up to thousands of DSL lines, a physical layer impairment in one line may have negative consequences on the performance of various other lines in the same binder because of crosstalk between the line holding the source of the physical problem and other lines in the binder. In other words, the line that is a direct victim of a physical problem becomes a disturbing line for other, indirect victim lines in the binder.

European patent application EP 2 383 896 entitled "Methods and devices for detecting electromagnetic interference on data transmission lines" from applicant Alcatel Lucent, recognises the problem of electromagnetic interference or radio frequency interference (RFI) induced in DSL lines by a power supply unit or PSU. Apart from PSUs of various household appliances, also the PSU powering the DSL Customer Premises Equipment (CPE) modem may induce noise and consequently negatively affect the performance of DSL lines. This is in particular so in case of a defective PSU, in case of absence of shielding or defective shielding of PSU cables and/or copper twisted pairs that are used for DSL services, in case of untwisted pairs, or in case the PSU powering the DSL modem is embedded close to the DSL analogue front-end (AFE) resulting in higher PSU-RFI and more severe degradation of the signal-to-noise ratio (SNR) and performance. EP 2 383 896 relies on the fact that noise induced by a PSU in a DSL line is regularly spaced in frequency and therefore has a specific pattern or signature that is recognizable by measuring noise as a function of frequency and analysing the periodicities in the noise signal. Based thereon, EP 2 383 896 discloses a solution that enables to detect the presence of PSU induced RFI in a DSL line.

Although the solution known from EP 2 383 896 enables to distinguish PSU induced noise from other types of physical layer impairments, EP 2 383 896 may still lead to the DSL operator giving wrong repair advice to its customers. Since DSL lines are usually deployed in binders and crosstalk occurs between DSL lines that form part of the same binder, PSU induced noise will be shared between neighbouring twisted pairs in a DSL binder. Such indirectly induced PSU noise will be recognized by the method known from EP 2 383 896 which will lead to the diagnosis of a strongly emitting PSU or badly designed DSL modem being present on the DSL line although there is no problem with the analysed DSL line since the PSU induced noise originates from a neighbouring DSL line. The DSL operator in other words shall wrongly advice his customer to replace his DSL modem or to check the in-house cabling of possible PSU disturbers.

It is an objective to disclose an improved device and method for detecting PSU induced noise that resolves the above mentioned shortcomings of existing solution. More particularly, it is an objective to disclose such device and method that avoids misdiagnosis in case PSU RFI is indirectly induced in DSL lines forming part of a single binder. It is a further objective to disclose such a device and method that enables to identify the line holding the disturbing PSU in order to increase the reliability of the diagnosis and repair advice that is given by DSL operators as a result of the diagnosis.

### Summary of the Invention

According to the present invention, the above mentioned objectives are realized by the device for identifying a line holding a disturbing power supply unit for a plurality of Digital Subscriber Lines, the device being defined by claim 1, comprising:
- a noise data collector for collecting for each one of the plurality of Digital Subscriber Lines noise data as a function of frequency;
- a noise signature detector for detecting for each one of the plurality of Digital Subscriber Lines in the noise data the presence or absence of one or more noise signature of one or more disturbing power supply unit, each noise signature of a disturbing power supply unit representing a pattern of regularly spaced noise peaks in frequency,
- a group generator for grouping lines out of the plurality of Digital Subscriber Lines that are impacted by a noise signature from a common disturbing power supply unit, i.e. with noise peaks at substantially equal frequencies, to thereby generate one or more groups of common victim lines; and
- a disturber identifier for determining within each group of common victim lines a disturbing line holding the common disturbing power supply unit by identifying within the group of common victim lines the line with most severe noise signature from the common disturbing power supply unit in its noise data.

Thus, the present invention relies on a line-by-line detection of the presence of a PSU noise pattern in accordance with the teaching of EP 2 383 896, but in addition thereto performs binder-level analysis to identify PSU noise patterns in plural lines that originate from a single disturbing PSU. Lines that are commonly impacted by a single PSU are isolated in a group, and within each group of lines that are victim of a common disturbing PSU, the directly disturbed line is distinguished from the indirectly disturbed lines such that repair advice can be given to the customer of the directly disturbed line. Thereto, the tool according to the present invention identifies within each group of lines commonly affected by a single noise emitting PSU, the line with the most severe noise signature, i.e. the line with the highest noise peaks in the regularly spaced noise pattern that results from that PSU. Whereas the per-line analysis known from EP 2 383 896 gave rise to faulty repair advice for lines wherein PSU RFI from neighbouring lines is induced, the binder-level approach according to the present invention enables to identify the disturbing PSU RFI emitter line, and even to quantify the impact on neighbouring victim lines.

It is noticed that a single DSL line may be victim of more than one noise emitting PSU. As a consequence, each DSL line may form part of plural groups that are created according to the present invention. In other words, there may be overlap between the different groups of DSL lines.

It is further noticed that the term "holding" used here above and in the claims must be interpreted broadly to cover any line that is itself a disturber/emitter inducing PSU-RFI in other lines. This may be a consequence of the line being connected to a disturbing PSU or being terminated by a modem holding the disturbing PSU, but could as well be a consequence of an external PSU disturber that has a noise impact on the line resulting in indirect PSU-RFI being induced in other lines.

According to a further aspect of the device for identifying a line holding a disturbing power supply unit according to the present invention, the noise data comprise either:
- Quiet-Line-Noise or QLN measurements;
- Signal-to-Noise Ratio or SNR measurements; or
- Bit loading measurements.

Indeed, as already indicated in EP 2 383 896 incorporated by reference, the PSU RFI signature consisting of a noise pattern that is periodically spaced in frequency, may be detected by analysing the Quiet-Line-Noise or QLN that is measured by DSL modems. Nevertheless, any skilled person will appreciate that variant embodiments of the present invention may use other noise related measurements and/or data such as for instance the Signal-to-Noise Ratio (SNR) or bit loading parameters in order to recognize the pattern of regularly spaced noise peaks as a function of frequency, indicative for the presence of a disturbing PSU. The present invention in other words is not limited to any particular method or parameter used to determine line-per-line the presence or absence of one or more PSU RFI noise signatures.

In a preferred embodiment of the device for identifying a line holding a disturbing power supply unit according to the present invention, defined by claim 3, the group generator comprises:
- a dependency calculator adapted to compute a correlation or dependency between noise signatures of pairs of lines;
- a distance matrix generator adapted to compute a distance matrix comprising a distance value for each pair of lines, the distance value being derived from the correlation or dependency according to a distance metric, and the distance value representing the likelihood that noise signatures detected in a pair of lines result from a common disturbing power supply unit; and
- a cluster generator adapted to cluster the lines based on the distance matrix and a distance criterion to thereby generate the one or more groups of common victim lines.

Thus, for each pair of DSL lines, correlation techniques or alternate dependency identification techniques are applied on the noise signal, eventually filtered, in order to compare the location in frequency, shape, repeatability and amount of noise peaks. The resulting correlation represents a distance value, or alternatively a distance value is calculated from the resulting correlation or dependency according to a predetermined distance metric. The so obtained distance value is an estimator for the level of likelihood that two DSL lines embed noise resulting from the same PSU. By computing this likelihood for every pair of DSL lines, a distance matrix can be filled wherein each DSL line of a binder occupies a column and each DSL line of that binder occupies a row. Lines that are close to each other, i.e. lines with a high likelihood for being affected by a common PSU RFI disturber, are then clustered to form groups of lines that are victim of a single PSU RFI disturber. Each group shall contain DSL lines whose noise signal presents a similar PSU RFI signature that is therefore supposed to be caused by a single disturber. As already indicated above, these groups may overlap.

In accordance with a further optional aspect of the device for identifying a line holding a disturbing power supply unit according the present invention, as defined by claim 4, the cluster generator is adapted to apply hierarchical clustering.

Indeed, a suitable clustering technique for grouping lines that are victim of a common PSU RFI disturber consists in hierarchical clustering. This technique is non-parametric and has the advantage that it does not need to know the amount of disturbers in advance. It focuses on grouping lines presenting similar noise patterns and separating them from lines presenting independent noise patterns. This way, clusters or groups of lines are formed that each contain a family of lines whose performance is most likely affected by a single PSU RFI disturber.

In addition to a device as defined by claim 1, the current invention also relates to a corresponding method for identifying a line holding a disturbing power supply unit for a plurality of Digital Subscriber Lines, the method being defined by claim 5, comprising:
- collecting for each one of the plurality of Digital Subscriber Lines noise data as a function of frequency;
- detecting for each one of the plurality of Digital Subscriber Lines in the noise data the presence or absence of one or more noise signature of one or more disturbing power supply unit, each noise signature of a disturbing power supply unit representing a pattern of regularly spaced noise peaks in frequency,
- grouping lines out of the plurality of Digital Subscriber Lines that are impacted by a noise signature from a common disturbing power supply unit, i.e. with noise peaks at substantially equal frequencies, to thereby generate one or more groups of common victim lines; and
- determining within each group of common victim lines a disturbing line holding the common disturbing power supply unit by identifying within the group of common victim lines the line with most severe noise signature from the common disturbing power supply unit in its noise data.

Furthermore, the present invention relates to a data processing system as defined by claim 6 comprising means for carrying out the method of claim 5.

The invention also relates to a corresponding computer program as defined by claim 7, comprising software code adapted to perform the method of claim 5, and to a computer readable storage medium as defined by claim 8, comprising the computer program of claim 7.

### Brief Description of the Drawings

Fig. 1 shows Quiet-Line-Noise (QLN) data as a function of frequency measured on a DSL line in an embodiment of the present invention that is affected by RFI from a disturbing PSU;
Fig. 2 illustrates the clustering of DSL lines that form part of a single binder into groups of lines that are affected by a common PSU RFI disturber; and
Fig. 3 is a flowchart illustrating an embodiment of the method for identifying a line holding a disturbing PSU according to the present invention.

### Detailed Description of Embodiment(s)

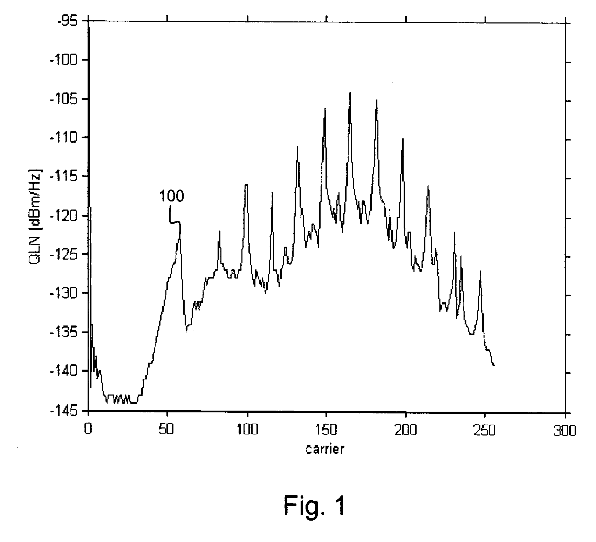

Fig. 1 illustrates that radio frequency interference (RFI) peaks, regularly spaced in frequency, can be seen in the Quiet-Line-Noise (QLN) curve 101 measured by a DSL modem on a DSL line that is affected by a noise emitting PSU. These RFI peaks, due to the presence of a strongly noise-emitting PSU, degrade the signal-to-noise ratio (SNR) and limit the DSL bitrate performance.The typical pattern of regularly spaced RFI rays in the QLN curve that is automatically measured by DSL modems thus indicates the presence of a disturbing PSU. The presence of such PSU-RFI increases the noise value for many tones or sub-carriers that are used in the DSL multi-tone modulation scheme, degrading the SNR of these tones, limiting the capacity of these tones to carry bits, and consequently reducing the global bitrate performance.

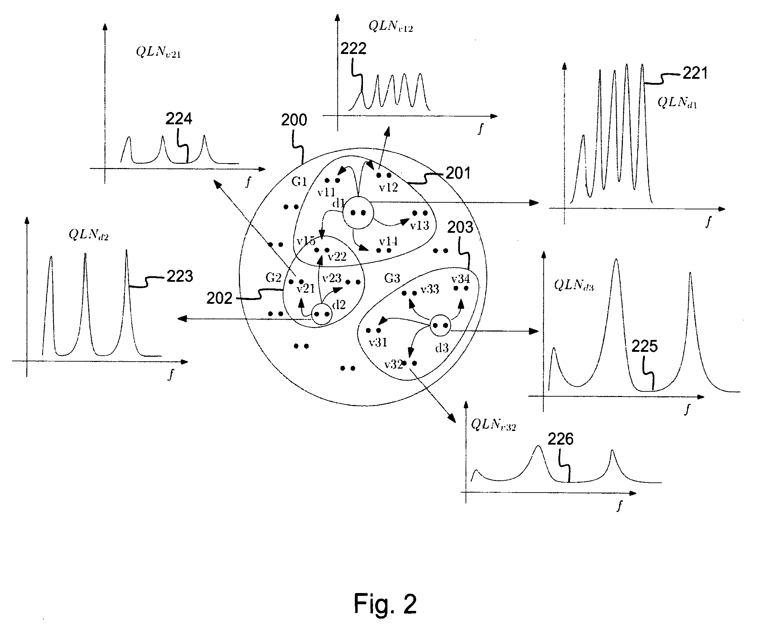

Fig. 2 shows a slice-view of a DSL binder 200 containing twisted copper pairs denoted d1, v11, v12, v13, v14, v15, d2, v21, v22, v23, d3, v31, v32, v33, v34, etc. Some of these DSL lines represent PSU-RFI disturbers whereas others are impacted victim lines. An embodiment of the method according to the present invention shall identify independent families of PSU-RFI impacted lines through binder-level analysis and, within each family or group of impacted lines identify the disturber and the victims. The embodiment illustrated by Fig. 2, thereto makes use of the insight that a PSU-RFI disturber leaves a noise signature of regularly spaced RFI peaks in the measured QLN to identify the lines that are impacted by such PSU-RFI disturber. Thereafter, the PSU-RFI noise patterns are clustered in independent families, using a correlation and clustering technique, in order to group lines that are jointly affected by a single PSU-RFI disturber. In Fig. 2 for instance, the twisted copper pairs d1, v11, v12, v13, v14, and v15/v22 are clustered into a first group of DSL lines, G1 or 201, that are affected by a single, first PSU-RFI disturber. The measured QLN for the lines in this group 201, e.g. 221 or QLN_{d1} measured on twisted copper pair d1 and 222 or QLNᵥ₁₂ measured on twisted copper pair v12, show RFI peak patterns that are similar: same or similar number of RFI peaks (it is noticed that some peaks may not be visible e.g. due to presence of background noise), same frequency position of the peaks, etc. Similarly, the twisted copper pairs d2, v21, v15/v22 and v23 are clustered into a second group of DSL lines, G2 or 202, that are affected by a single, second PSU-RFI disturber. Again, the measured QLN for the lines in this group 202, e.g. 223 or QLN_{d2} measured on twisted copper pair d2 and 224 or QLNᵥ₂, measured on twisted copper pair v21, show RFI peak patterns that are similar. It is noticed that the QLN measured on twisted copper pair v15/v22, not shown in Fig. 2, contains RFI peaks similar to those in group 201 and similar to those in group 202 since this line v15/v22 has become part of both group G1 and G2 as a result of the clustering. Fig. 2 further shows that the twisted copper pairs d3, v31, v32, v33 and v44 are clustered into a third group of DSL lines G3 or 203. The measured QLN for the lines in this group 203 also contain RFI peak patterns that are similar, as is for instance illustrated by 225 or QLN_{d3} measured on twisted copper pair d3 and 226 or QLNᵥ₃₂ measured on twisted copper pair v32. For each group of lines, 201-203, the present invention further determines the disturbing lines that impact the others, i.e. the victim lines. The invention thereto quantifies the impact of the extra PSU-RFI noise on the DSL lines and selects within each group the line that is most affected as the disturber. In the example of Fig. 2, d1 is the disturber in group G1, d2 is the disturber in group G2, and d3 is the disturber in group G3. The disturbers hold the disturbing PSU, either inside their DSL modem or in the vicinity thereof such that the users of these lines can be given repair advice. All other lines are victim lines of the PSU-RFI disturbers and need not be given repair advice since the source of the problem impacting their performance is external.

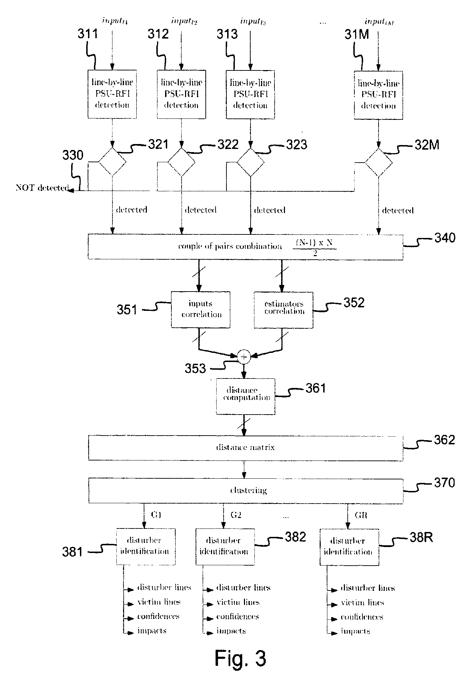

Fig. 3 represents a flowchart illustrating an embodiment of the method according to the present invention allowing detection of multiple PSU-RFI impacting disturber lines together with their respective victim lines and quantifying the impact of such PSU-RFI disturbers on the respective victim lines.

In a first step copper pairs presenting a signature of regularly spaced RFI in frequency are detected. Thereto, the noise data, e.g. the QLN, are collected for each of the M lines that form part of the binder. The QLN measured on the M lines serves as input for the algorithm and is denoted inputs_{I1}, input_{I2}, input_{I3}, ..., input_{IM} in Fig. 3. A line-by-line PSU-RFI pattern detection is then performed as is indicated by 311, 312, 313, ... 31M in Fig. 3. Thereto, the method described in the above cited European patent application EP 2 383 896 is applied, although it is noticed that alternative PSU-RFI detection algorithms could be considered as well. Lines 330 for which no PSU-RFI pattern is detected will no longer be considered in the algorithm. Lines for which one or more PSU-RFI patterns are detected in the QLN data are further subject to the correlation and clustering steps in the algorithm that will group lines affected by a single PSU-RFI disturber. This filtering of lines that are not affected by PSU-RFI disturbers is illustrated by 321, 322, 323, ..., 32M in Fig. 3.

In a second step, illustrated by sub-steps 340, 351, 352, 353, 361, 362 and 370 in Fig. 3, copper pairs impacted by a common PSU-RFI disturber are grouped in order to separate them into independent families of impacted lines. Conceptually, this is the separation of the lines into groups or clusters presenting similar PSU-RFI noise patterns. With reference to Fig. 2, this second step results in the identification and separation of the groups G1, G2 and G3. In the following paragraphs, it will be explained how this is done in practice.

The QLN data collected on all impacted copper pairs identified in the first step, are correlated for each combination of two copper pairs. Thus, if it is assumed that PSU-RFI patterns are detected in N out of M lines in the binder, the N lines will be combined into (N-1) x N / 2 couples of DSL lines in sub-step 340. Next, inputs for the correlation 351, like for instance the noise shapes or QLN values measured, and additional estimators 352, like for instance the autocorrelation distance, the frequency location of RFI peaks, the number of harmonics, or other estimators that globally track the respective noise shapes, the periodicity and the height of the noise peaks, are combined for each couple of twisted pairs in 353. Various correlation techniques are described in literature. Different implementations of the present invention may make use of a different correlation or dependency identification technique, or of a different combination of such correlation or dependency identification techniques. The correlation technique or a combination of correlation techniques finally results in a distance value computation, as is indicated by sub-step 361, for copper pair 1 and copper pair 2, copper pair 1 and copper pair 3, ..., copper pair 1 and copper pair N, copper pair 2 and copper pair 3, copper pair 2 and copper pair 4, ..., copper pair 2 and copper pair N, etc., until a distance value is computed between copper pair N-1 and copper pair N. With the distance values computed in sub-step 361, a distance matrix is built in sub-step 362. The distance values in this matrix represent the level of likelihood that a copper pair embeds noise that has a shape close to the shape of the other copper pair.

Starting from the distance matrix, clustering techniques are used in sub-step 370 to recognize lines that are close to each other and gather them into independent clusters or groups, G1, G2, ... GR. Each group contains copper pairs presenting a similar PSU-RFI noise pattern that is therefore supposed to be caused by a common PSU-RFI disturber. A suitable clustering technique consists for instance in hierarchical clustering. This clustering technique has as advantage that it does not require to know in advance the amount of disturbers, and therefore the amount of clusters, but the present invention obviously is not limited to a particular clustering technique. The clustering technique focuses on grouping lines presenting a similar noise pattern and on separating them from lines presenting an independent noise pattern.

In the third step, denoted by 381, 382, ... 38R in Fig. 3, among each group of lines identified in the second step, the disturber line and the victim lines will be identified. For that purpose, the line presenting the highest impact of PSU-RFI is the one that most likely holds the disturbing PSU. Indeed, because the lines in a binder are only passively coupled, there is no physical reason why neighboring victim pairs would present a higher PSU-RFI noise pattern than the line that is directly affected by the disturbing PSU. The line with highest PSU-RFI impact is therefore assumed to be the emitter source of PSU-RFI noise in the other, victim lines. Another justification for this identification of the disturber lies in the fact that radiated electro-magnetic power decreases with the square of the distance. Since the disturber, i.e. the line directly impacted by the noise emitting PSU, must be closer to the noise source than victim lines that are indirectly impacted as a result of sharing the same binder, the disturber suffers from highest RFI and can be identified as such. Referring again to Fig. 2, the third step results in identifying line d1 as the disturber in group G1, line d2 as disturber in group G2, and line d3 as disturber in group G3. The other lines that form part of the groups G1, G2 and G3 are victim lines.

An extra refinement of the method according to the present invention occurs in case a line is subjected to several disturbers, as is the case for instance in Fig. 2 for the copper pair v15/v22. According to the distance matrix that makes use of estimators, different patterns of PSU-RFI can be handled without impact on the efficiency. Therefore, by separating the types of peaks within a given PSU-RFI noise signal, a line can belong to two or more groups. The skilled person will also appreciate that a line that is identified as disturber in one group can be victim in another group.

It is noticed that although the embodiment illustrated by Fig. 2 and Fig. 3 is based on QLN measurements, it is straightforward for a person skilled in the art to adapt the invention to other DSL noise parameters such as SNR or bitloading.

The main advantage of the present invention lies in the ability to identify the lines suffering from extra noise produced by PSUs and therefore acting as a disturber within the binder, as well as the ability to quantify the impact of such disturbers on the performance of neighboring lines in the binder. The detection of such a binder-disturber is important due to the larger consequences it produces. The identification of such a disturber is even more crucial in order to be able to fix a problem that affects multiple lines rapidly and more reliably.

The present invention enables to make the distinction between disturbing lines and victim lines. In the case of a disturbing line, changing the modem or the in-house cabling will really target the source of the problem and the end-user will notice an improvement in its DSL performances. In the case of a victim line, the repair advice will differ and the operator will be able to warn the user about the presence of a disturbing line in the neighbourhood. The operator will not target a change of modem or change of in the in-house cabling for such a victim line but will try to take action on the disturber line. Efficiency and reliability of customer care support and field action is therefore highly improved thanks to the current invention.

In the uprising context of binders being shared between several operators as a result of physical loop unbundling, the present invention also helps to establish responsibilities if lines of a given operator are impacting lines of another operator. This could happen for instance if one operator works with some given types of CPE that are cheap and not well-designed, e.g. embedding the modem's PSU close to the analogue front-end, as a result of which they emit extra PSU-RFI noise in the binder.

The method according to the invention shall typically be computer-implemented on a data processing system or computing device. A data processing system or computing device that is operated according to the present invention can include a workstation, a server, a laptop, a desktop, a hand-held device, a mobile device, a tablet computer, or other computing device, as would be understood by those of skill in the art.

The data processing system or computing device can include a bus or network for connectivity between several components, directly or indirectly, a memory or database, one or more processors, input/output ports, a power supply, etc. One of skill in the art will appreciate that the bus or network can include one or more busses, such as an address bus, a data bus, or any combination thereof, or can include one or more network links. One of skill in the art additionally will appreciate that, depending on the intended applications and uses of a particular embodiment, multiple of these components can be implemented by a single device. Similarly, in some instances, a single component can be implemented by multiple devices.

The data processing system or computing device can include or interact with a variety of computer-readable media. For example, computer-readable media can include Random Access Memory (RAM), Read Only Memory (ROM), Electronically Erasable Programmable Read Only Memory (EEPROM), flash memory or other memory technologies, CDROM, digital versatile disks (DVD) or other optical or holographic media, magnetic cassettes, magnetic tape, magnetic disk storage or other magnetic storage devices that can be used to encode information and can be accessed by the data processing system or computing device.

The memory can include computer-storage media in the form of volatile and/or nonvolatile memory. The memory may be removable, non-removable, or any combination thereof. Exemplary hardware devices are devices such as hard drives, solid-state memory, optical-disc drives, or the like. The data processing system or computing device can include one or more processors that read data from components such as the memory, the various I/O components, etc.

The I/O ports can allow the data processing system or computing device to be logically coupled to other devices, such as I/O components. Some of the I/O components can be built into the computing device. Examples of such I/O components include a microphone, joystick, recording device, game pad, satellite dish, scanner, printer, wireless device, networking device, or the like.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A device for identifying a line (d1, d2, d3) holding a disturbing power supply unit for a plurality of Digital Subscriber Lines (d1, v11, v12, v13, v14, v15, d2, v21, v22, v23, d3, v31, v32, v33, v34, ...), said device comprising:
- a noise data collector for collecting for each one of said plurality of Digital Subscriber Lines (d1, v11, v12, v13, v14, v15, d2, v21, v22, v23, d3, v31, v32, v33, v34, ...) noise data as a function of frequency (221, 222, 223, 224, 225, 226; 311, 312, 313, ... 31 M);
- a noise signature detector for detecting for each one of said plurality of Digital Subscriber Lines (d1, v11, v12, v13, v14, v15, d2, v21, v22, v23, d3, v31, v32, v33, v34, ...) in said noise data (221, 222, 223, 224, 225, 226; 311, 312, 313, ... 31M) the presence or absence of one or more noise signature of one or more disturbing power supply unit, each noise signature of a disturbing power supply unit representing a pattern of regularly spaced noise peaks in frequency,
wherein said device further comprises:
- a group generator for grouping lines out of said plurality of Digital Subscriber Lines (d1, v11, v12, v13, v14, v15, d2, v21, v22, v23, d3, v31, v32, v33, v34, ...) that are impacted by a noise signature from a common disturbing power supply unit, i.e. with noise peaks at substantially equal frequencies, to thereby generate one or more groups of common victim lines (G1, G2, G3); and
- a disturber identifier for determining within each group of common victim lines (G1, G2, G3) a disturbing line (d1, d2, d3) holding said common disturbing power supply unit by identifying within said group of common victim lines (G1, G2, G3) the line -with most severe noise signature from said common disturbing power supply unit in its noise data.

2. A device for identifying a line (d1, d2, d3) holding a disturbing power supply unit according to claim 1, wherein said noise data comprise either:
- Quiet Line Noise or QLN measurements (221, 222, 223, 224, 225, 226);
- Signal-to-Noise Ratio or SNR measurements; or
- Bit loading measurements.

3. A device for identifying a line (d1, d2, d3) holding a disturbing power supply unit according to claim 1, wherein said group generator comprises:
- a dependency calculator adapted to compute a correlation (351, 352, 353) or dependency between noise signatures of pairs of lines;
- a distance matrix generator adapted to compute a distance matrix (361) comprising a distance value (361) for each pair of lines, said distance value being derived from said correlation or dependency according to a distance metric, and said distance value representing the likelihood that noise signatures detected in a pair of lines result from a common disturbing power supply unit; and
- a cluster generator adapted to cluster said lines (370) based on said distance matrix and a distance criterion to thereby generate said one or more groups of common victim lines (G1, G2, G3).

4. A device for identifying a line (d1, d2, d3) holding a disturbing power supply unit according to claim 3, wherein said cluster generator is adapted to apply hierarchical clustering.

5. A method for identifying a line (d1, d2, d3) holding a disturbing power supply unit for a plurality of Digital Subscriber Lines (d1, v11, v12, v13, v14, v15, d2, v21, v22, v23, d3, v31, v32, v33, v34, ...), said method comprising:
- collecting for each one of said plurality of Digital Subscriber Lines (d1, v11, v12, v13, v14, v15, d2, v21, v22, v23, d3, v31, v32, v33, v34, ...) noise data as a function of frequency (221, 222, 223, 224, 225, 226; 311, 312, 313, ... 31 M);
- detecting for each one of said plurality of Digital Subscriber Lines (d1, v11, v12, v13, v14, v15, d2, v21, v22, v23, d3, v31, v32, v33, v34, ... ) in said noise data (221, 222, 223, 224, 225, 226; 311, 312, 313, ... 31 M) the presence or absence of one or more noise signature of one or more disturbing power supply unit, each noise signature of a disturbing power supply unit representing a pattern of regularly spaced noise peaks in frequency,
wherein said method further comprises:
- grouping lines out of said plurality of Digital Subscriber Lines (d1, v11, v12, v13, v14, v15, d2, v21, v22, v23, d3, v31, v32, v33, v34, ...) that are impacted by a noise signature from a common disturbing power supply unit, i.e. with noise peaks at substantially equal frequencies, to thereby generate one or more groups of common victim lines (G1, G2, G3); and
- determining within each group of common victim lines (G1, G2, G3) a disturbing line (d1, d2, d3) holding said common disturbing power supply unit by identifying within said group of common victim lines (G1, G2, G3) the line with most severe noise signature from said common disturbing power supply unit in its noise data.

6. A data processing system comprising means for carrying out the method of claim 5.

7. A computer program comprising software code adapted to perform the method of claim 5.

8. A computer readable storage medium comprising the computer program of claim 7.

## Patentansprüche

1. Vorrichtung für das Identifizieren eines Anschlusses (d1, d2, d3) mit störender Spannungsversorgungseinheit aus einer Vielzahl von digitalen Teilnehmeranschlüssen (d1, v11, v12, v13, v14, v15, d2, v21, v22, v23, d3, v31, v32, v33, v34, ...), wobei besagte Vorrichtung umfasst:
- einen Störgeräusch-Datensammler zum Sammeln von Störgeräuschdaten in Funktion der Frequenz (221, 222, 223, 224, 225, 226; 311, 312, 313, ...31 M) für jeden aus der Vielzahl digitaler Teilnehmeranschlüsse (d1, v11, v12, v13, v14, v15, d2, v21, v22, v23, d3, v31, v32, v33, v34, ...)
- einen Störgeräusch-Signaturdetektor, um für jeden aus besagter Vielzahl digitaler Teilnehmeranschlüsse (d1, v11, v12, v13, v14, v15, d2, v21, v22, v23, d3, v31, v32, v33, v34, ...) in besagten Störgeräuschdaten (221, 222, 223, 224, 225, 226; 311, 312, 313, ... 31M) das Vorhandensein oder Nichtvorhandensein einer oder mehrerer Störgeräuschsignaturen einer oder mehrerer Spannungsversorgungseinheiten zu detektieren, wobei jede Störgeräuschsignatur einer störenden Spannungsversorgungseinheit ein Muster regelmäßig verteilter Störgeräuschspitzen in einer Frequenz darstellt,
wobei die Vorrichtung weiterhin umfasst:
- einen Gruppengenerator für das Gruppieren von Anschlüssen aus besagter Vielzahl digitaler Teilnehmeranschlüsse (d1, v11, v12, v13, v14, v15, d2, v21, v22, v23, d3, v31, v32, v33, v34, ...), auf die sich die Störgeräuschsignatur einer ihnen gemeinsamen, störenden Spannungsversorgungseinheit auswirkt, also mit Störgeräuschspitzen von weitgehend ähnlicher Frequenz, um dadurch eine oder mehrere Gruppen gemeinsam betroffener Anschlüsse (G1, G2, G3) zu generieren; und
- einen Störer-Identifizierer, um in jeder Gruppe gemeinsam betroffener Anschlüsse (G1, G2, G3) einen störenden Anschluss (d1, d2, d3) zu bestimmen, der besagte, ihnen gemeinsame, störende Spannungsversorgungseinheit enthält, und zwar durch das Identifizieren von demjenigen Anschluss aus besagter Gruppe gemeinsam betroffener Anschlüsse (G1, G2, G3), welcher in seinen Störgeräuschdaten die stärkste Störgeräuschsignatur aus besagter gemeinsamer, störender Spannungsversorgungseinheit aufweist.

2. Vorrichtung für das Identifizieren eines Anschlusses (d1, d2, d3), eine störende Spannungsversorgungseinheit nach Anspruch 1 enthaltend, wobei besagte Störgeräuschdaten weiterhin umfassen:
- Leerkanalrausch-Messungen (QLN, 221, 222, 223, 224, 225, 226);
- Signalrauschabstands-Messungen (SNR); oder
- Bit-Loading-Messungen.

3. Vorrichtung für das Identifizieren eines Anschlusses (d1, d2, d3), eine störende Spannungsversorgungseinheit nach Anspruch 1 enthaltend, wobei besagter Gruppengenerator umfasst:
- eine Vorrichtung zur Berechnung der Dependenz, ausgelegt für das Berechnen einer Korrelation (351, 352, 353) oder Dependenz zwischen Störgeräuschsignaturen von Anschlusspaaren;
- einen Distanzmatrix-Generator, ausgelegt für das Berechnen einer Distanzmatrix (361), die einen Distanzwert (361) für jedes Anschlusspaar umfasst, wobei besagter Distanzwert abgeleitet wird von besagter Korrelation oder Dependenz entsprechend einer Distanzmetrik und besagter Distanzwert die Wahrscheinlichkeit dafür repräsentiert, dass in einem Anschlusspaar festgestellte Störgeräuschsignaturen von einer gemeinsamen störenden Spannungsversorgungseinheit herrühren; und
- einen Cluster- oder Gruppengenerator, ausgelegt für das Gruppieren besagter Anschlusspaare (370) auf der Grundlage besagter Distanzmatrix und eines Distanzkriteriums, um dadurch besagte eine Gruppe oder mehrere Gruppen gemeinsam betroffener Anschlüsse (G1, G2, G3) zu generieren.

4. Vorrichtung für das Identifizieren eines Anschlusses (d1, d2, d3), eine störende Spannungsversorgungseinheit nach Anspruch 3 enthaltend, wobei besagter Gruppengenerator ausgelegt ist für die Anwendung eines hierarchischen Clustering.

5. Verfahren für das Identifizieren eines Anschlusses (d1, d2, d3) mit störender Spannungsversorgungseinheit aus einer Vielzahl von digitalen Teilnehmeranschlüssen (d1, v11, v12, v13, v14, v15, d2, v21, v22, v23, d3, v31, v32, v33, v34, ...), wobei besagtes Verfahren umfasst:
- das Sammeln von Störgeräuschdaten in Funktion der Frequenz (221, 222, 223, 224, 225, 226; 311, 312, 313, ...31M) für jeden aus der Vielzahl digitaler Teilnehmeranschlüsse (d1, v11, v12, v13, v14, v15, d2, v21, v22, v23, d3, v31, v32, v33, v34, ...)
- für jeden aus besagter Vielzahl digitaler Teilnehmeranschlüsse (d1, v11, v12, v13, v14, v15, d2, v21, v22, v23, d3, v31, v32, v33, v34, ...) das Detektieren des Vorhandenseins oder Nichtvorhandenseins einer oder mehrerer Störgeräuschsignaturen einer oder mehrerer Spannungsversorgungseinheiten in besagten Störgeräuschdaten (221, 222, 223, 224, 225, 226; 311, 312, 313, ... 31 M), wobei jede Störgeräuschsignatur einer störenden Spannungsversorgungseinheit ein Muster regelmäßig verteilter Störgeräuschspitzen in einer Frequenz darstellt,
wobei besagtes Verfahren weiterhin umfasst:
- das Gruppieren von Anschlüssen aus besagter Vielzahl digitaler Teilnehmeranschlüsse (d1, v11, v12, v13, v14, v15, d2, v21, v22, v23, d3, v31, v32, v33, v34, ...), auf die sich die Störgeräuschsignatur einer ihnen gemeinsamen, störenden Spannungsversorgungseinheit auswirkt, also mit Störgeräuschspitzen von weitgehend ähnlicher Frequenz, um dadurch eine oder mehrere Gruppen gemeinsam betroffener Anschlüsse (G1, G2, G3) zu generieren; und
- in jeder Gruppe gemeinsam betroffener Anschlüsse (G1, G2, G3) das Bestimmen eines störenden Anschlusses (d1, d2, d3), der besagte, ihnen gemeinsame, störende Spannungsversorgungseinheit enthält, und zwar durch das Identifizieren von demjenigen Anschluss aus besagter Gruppe gemeinsam betroffener Anschlüsse (G1, G2, G3), welcher in seinen Störgeräuschdaten die stärkste Störgeräuschsignatur aus besagter gemeinsamer, störender Spannungsversorgungseinheit aufweist.

6. Datenverarbeitungssystem mit Mitteln zum Ausführen des Verfahrens nach Anspruch 5.

7. Computerprogramm, einen Softwarecode umfassend, der ausgelegt ist für das Ausführen des Verfahrens nach Anspruch 5.

8. Computerlesbares Speichermedium, ein Computerprogramm nach Anspruch 7 umfassend.

## Revendications

1. Dispositif pour identifier une ligne (d1, d2, d3) contenant une unité d'alimentation électrique perturbatrice pour une pluralité de lignes d'abonné numérique (d1, v11, v12, v13, v14, v15, d2, v21, v22, v23, d3, v31, v32, v33, v34, ...), ledit dispositif comprenant :
- un collecteur de données de bruit pour collecter pour chaque ligne parmi ladite pluralité de lignes d'abonné numérique (d1, v11, v12, v13, v14, v15, d2, v21, v22, v23, d3, v31, v32, v33, v34, ...) des données de bruit en fonction de la fréquence (221, 222, 223, 224, 225, 226 ; 311, 312, 313,... 31M);
- un détecteur de signature de bruit pour détecter pour chaque ligne parmi ladite pluralité de lignes d'abonné numérique (d1, v11, v12, v13, v14, v15, d2, v21, v22, v23, d3, v31, v32, v33, v34, ...) dans lesdites données de bruit (221, 222, 223, 224, 225, 226 ; 311, 312, 313,... 31M) la présence ou l'absence d'une ou de plusieurs signatures de bruit d'une ou de plusieurs unités d'alimentation électrique perturbatrices, chaque signature de bruit d'une unité d'alimentation électrique perturbatrice représentant un modèle de pics de bruit régulièrement espacés en fréquence,
ledit dispositif comprenant en outre :
- un générateur de groupe pour regrouper des lignes parmi ladite pluralité de lignes d'abonné numérique (d 1, v11, v12, v13, v14, v15, d2, v21, v22, v23, d3, v31, v32, v33, v34, ...) qui sont impactées par une signature de bruit d'une unité d'alimentation électrique perturbatrice commune, c'est-à-dire avec des pics de bruit à des fréquences sensiblement égales, afin de générer un ou plusieurs groupes de lignes victimes communes (G1, G2, G3) ; et
- un identifiant de perturbation pour déterminer dans chaque groupe de lignes victimes communes (G1, G2, G3) une ligne perturbatrice (d1, d2, d3) contenant ladite unité d'alimentation électrique perturbatrice commune en identifiant dans ledit groupe de lignes victimes communes (G1, G2, G3) la ligne la plus impactée par la signature de bruit de ladite unité d'alimentation électrique perturbatrice commune dans ses données de bruit.

2. Dispositif pour identifier une ligne (d1, d2, d3) contenant une unité d'alimentation électrique perturbatrice selon la revendication 1, dans lequel lesdites données de bruit comprennent :
- des mesures de bruit de ligne discret ou QLN (221, 222, 223, 224, 225, 226) ;
- des mesures de rapport signal sur bruit ou SNR ; ou
- des mesures de chargement de bits.

3. Dispositif pour identifier une ligne (d1, d2, d3) contenant une unité d'alimentation électrique perturbatrice selon la revendication 1, dans lequel ledit générateur de groupe comprend :
- un calculateur de dépendance adapté pour calculer une corrélation (351, 352, 353) ou une dépendance entre des signatures de bruit de paires de lignes ;
- un générateur de matrice de distance adapté pour calculer une matrice de distance (361) comprenant une valeur de distance (361) pour chaque paire de lignes, ladite valeur de distance étant dérivée de ladite corrélation ou dépendance conformément à un indice de distance, et ladite valeur de distance représentant la probabilité que des signatures de bruit détectées dans une paire de lignes résultent d'une unité d'alimentation électrique perturbatrice commune ; et
- un générateur de regroupement adapté pour regrouper lesdites lignes (370) sur la base de ladite matrice de distance et d'un critère de distance afin de générer ledit ou lesdits groupes de lignes victimes communes (G1, G2, G3).

4. Dispositif pour identifier une ligne (d1, d2, d3) contenant une unité d'alimentation électrique perturbatrice selon la revendication 3, dans lequel ledit générateur de regroupement est adapté pour appliquer un regroupement hiérarchique.

5. Procédé pour identifier une ligne (d1, d2, d3) contenant une unité d'alimentation électrique perturbatrice pour une pluralité de lignes d'abonné numérique (d1, v11, v12, v13, v14, v15, d2, v21, v22, v23, d3, v31, v32, v33, v34, ...), ledit procédé comprenant les étapes suivantes :
- collecter pour chaque ligne parmi ladite pluralité de lignes d'abonné numérique (d 1, v11, v12, v13, v14, v15, d2, v21, v22, v23, d3, v31, v32, v33, v34, ...) des données de bruit en fonction de la fréquence (221, 222, 223, 224, 225, 226 ; 311, 312, 313,... 31M) ;
- détecter pour chaque ligne parmi ladite pluralité de lignes d'abonné numérique (d1, v11, v12, v13, v14, v15 ; d2, v21, v22, v23, d3, v31, v32, v33, v34, ...) dans lesdites données de bruit (221, 222, 223, 224, 225, 226 ; 311, 312, 313,... 31 M) la présence ou l'absence d'une ou de plusieurs signatures de bruit d'une ou de plusieurs unités d'alimentation électrique perturbatrices, chaque signature de bruit d'une unité d'alimentation électrique perturbatrice représentant un modèle de pics de bruit régulièrement espacés en fréquence,
ledit procédé comprenant en outre les étapes suivantes :
- regrouper des lignes parmi ladite pluralité de lignes d'abonné numérique (d1, v11, v12, v13, v14, v15, d2, v21, v22, v23, d3, v31, v32, v33, v34, ...) qui sont impactées par une signature de bruit d'une unité d'alimentation électrique perturbatrice commune, c'est-à-dire avec des pics de bruit à des fréquences sensiblement égales, afin de générer un ou plusieurs groupes de lignes victimes communes (G1, G2, G3) ; et
- déterminer dans chaque groupe de lignes victimes communes (G1, G2, G3) une ligne perturbatrice (d1, d2, d3) contenant ladite unité d'alimentation électrique perturbatrice commune en identifiant dans ledit groupe de lignes victimes communes (G1, G2, G3) la ligne la plus impactée par la signature de bruit de ladite unité d'alimentation électrique perturbatrice commune dans ses données de bruit.

6. Système de traitement de données comprenant des moyens pour mettre en oeuvre le procédé selon la revendication 5.

7. Programme informatique comprenant un code logiciel adapté pour exécuter le procédé selon la revendication 5.

8. Support de stockage lisible par un ordinateur comprenant le programme informatique selon la revendication 7.
